# EUROPÄISCHE PATENTSCHRIFT

(11) **EP 4 200 491 B1**
(45) Veröffentlichungstag und Bekanntmachung des Hinweises auf die Patenterteilung: **01.10.2025**
(21) Anmeldenummer: 21763353.6
(22) Anmeldetag: 20.08.2021
(51) Int. Cl.: E04B 2/74, E04B 1/68, E04B 1/94

(54) **VERFAHREN ZUR HERSTELLUNG MEHRERER DICHTPROFILE SOWIE DICHTPROFIL**
METHOD TO PRODUCE A SEALING PROFILE FOR DOUBLE EDGE JOINT AND DRY WALL, AND SEALING PROFILE
MÉTHODE DE PRODUCTION D'UN PROFILÉ D'ÉTANCHÉITÉ POUR JOINT DE BORD DOUBLE AINSI QUE CLOISON POUR POSE À SEC, ET PROFILÉ D'ÉTANCHÉITÉ

(30) Priorität: 24.08.2020 EP 20192382; 15.03.2021 EP 21162520; 15.03.2021 EP 21162522
(43) Veröffentlichungstag der Anmeldung: 28.06.2023
(73) Patentinhaber: Hilti Aktiengesellschaft, 9494 Schaan (LI)
(72) Erfinder: FÖRG, Christian, 86807 Buchloe (DE); KLEIN, Manfred, 86916 Kaufering (DE)
(74) Vertreter: Hilti Aktiengesellschaft Corporate Intellectual Property
(86) Internationale Anmeldenummer: PCT/EP2021/073166
(87) Internationale Veröffentlichungsnummer: WO 2022/043221

(56) Entgegenhaltungen:
- EP-A1- 2 990 553
- EP-A2- 2 423 396
- DE-U1- 20 306 687

## Beschreibung

Die Erfindung betrifft ein Verfahren zur Herstellung mehrerer streifenförmiger Dichtprofile für eine Randfuge, die zwischen einem Boden und einer angrenzenden Beplankung einer Trockenbauwand gebildet ist. Des Weiteren betrifft die Erfindung ein Dichtprofil, das nach einem derartigen Verfahren hergestellt ist.

Randfugen, insbesondere Bodenfugen, werden ausgeführt, um eine Schallentkopplung der Trockenbauwand von angrenzenden Wänden, Decken oder Böden, insbesondere Fußböden, sicherzustellen.

Die Wandflächen der Trockenbauwände werden durch Beplankungsteile wie Gipsplatten gebildet, die häufig vor Feuchtigkeit geschützt werden müssen. Die Randfugen bilden daher auch eine Barriere, die die Beplankungsteile vor aufsteigender Nässe beispielsweise bei einem Rohrbruch schützt.

Die Randfugen werden häufig mit Dichtprofilen abgedichtet, die mit geringem Aufwand montiert werden können, eine Schall- und Brandschutzfunktion bereitstellen sowie die Fuge zuverlässig gegen Luft und Gerüche abdichten. Derartige Dichtprofile weisen häufig einen komplexen Aufbau mit Dichtabschnitten und Befestigungsabschnitten aus unterschiedlichen Materialien auf.

Der Herstellungsprozess derartiger Dichtprofile ist jedoch aufwändig und umfasst üblicherweise mehrere Verfahrensschritte, bei denen Teile des Dichtprofils extrudiert und anschließen miteinander verbunden werden.

EP 2 423 396 A2 offenbart ein gattungsgemäßes Verfahren und ein gattungsgemäßes Dichtprofil.

Aufgabe der Erfindung ist es, ein Verfahren bereitzustellen, mittels dem mehrere Dichtprofile mit einem komplexen Aufbau mit besonders geringem Aufwand hergestellt werden können. Aufgabe der Erfindung ist es ferner, ein auf diese Weise besonders effizient hergestelltes Dichtprofil bereitzustellen.

Zur Lösung der Aufgabe ist ein Verfahren zur Herstellung mehrerer Dichtprofile für eine Randfuge vorgesehen, die zwischen einem Boden und einer angrenzenden Beplankung einer Trockenbauwand gebildet ist. Das Verfahren umfasst dabei die folgenden Schritte:
a) Bereitstellen einer ersten Bahn aus einem Dichtungsmaterial,
b) Aufbringen mehrerer Klebstoffstreifen auf die erste Bahn, wobei sich die Klebstoffstreifen jeweils in einer ersten Richtung der Bahn erstrecken und benachbarte Klebstoffstreifen zweier benachbarter Dichtprofile einen Abstand in einer zweiten zur ersten Richtung senkrechten Richtung voneinander haben, der mindestens 50 % der Höhe eines Dichtprofils im eingebauten Zustand entspricht,
c) Bereitstellen einer zweiten Bahn,
d) Zusammenführen und Verbinden der ersten Bahn mit der zweiten Bahn über die Klebstoffstreifen zu einer mehrlagigen Bahn, und
e) Einbringen mehrerer vertikaler Schnitte in der ersten Richtung in die mehrlagige Bahn beabstandet zu allen Klebstoffstreifen zur Bildung einer Anzahl an Dichtprofilen, wobei jeder Schnitt zwei Dichtprofile voneinander trennt, wobei jeder Schnitt einen geringsten Abstand zum unteren Ende des Klebstoffstreifen eines seiner zugeordneten Dichtprofile hat, der höchstens 20 % der Höhe des Dichtprofils entspricht, und einen geringsten Abstand zum oberen Ende des benachbarten Klebstoffstreifen des anderen seiner zugeordneten Dichtprofile hat, der wenigstens 50 % der Höhe des Dichtprofils senkrecht zur ersten Richtung entspricht. Die Dichtprofile bilden dabei jeweils ein Dichtprofil oder ein Dichtprofilrohling, d. h. ein Zwischenprodukt eines Dichtprofils.

Es wurde erfindungsgemäß erkannt, dass auf diese Weise mit geringem Aufwand mehrere Dichtprofile hergestellt werden können, die einen komplexen Aufbau haben.

Die Dichtprofile weisen dabei jeweils einen Grundkörper zum Abdichten der Randfuge und einen Befestigungsabschnitt auf, der über zumindest einen Klebstoffstreifen am Grundkörper angebracht ist.

Aufgrund der Art und Weise wie die Klebstoffstreifen und Schnitte beim Herstellungsverfahren auf- bzw. eingebracht werden, sind die Grundkörper ledig einseitig, beispielsweise bodenseitig, mit dem Befestigungsabschnitt verbunden, während ein oberer Abschnitt des Grundkörpers seitlich nicht am Befestigungsabschnitt befestigt ist. Hierdurch kann der obere Abschnitt besonders stark in vertikaler Richtung elastisch verformt bzw. zusammengedrückt werden. Auf diese Weise passt sich das Dichtprofil im eingebauten Zustand über einen besonders großen vertikalen Bereich an die Fugenbreite der Randfuge an und dichtet diese somit wirkungsvoll ab. Der Befestigungsabschnitt gewährleistet ferner eine definierte und zuverlässige Befestigung des Dichtprofils an einer Halteschiene der Trockenbauwand, so dass die Montage mit geringem Aufwand erfolgen kann.

In einer Ausführungsform wird vor dem Schritt e) der folgende Schritt ausgeführt:
f) Aufbringen mehrerer Montagehilfestreifen auf die zweite Bahn, wobei die Montagehilfestreifen entgegengesetzt zur ersten Bahn angeordnet sind und sich jeweils in der ersten Richtung der zweiten Bahn erstrecken, wobei jedem Klebstoffstreifen ein Montagehilfestreifen zugeordnet ist.

Mittels der Montagehilfestreifen können die Dichtprofile mit geringem Aufwand zuverlässig montiert werden, insbesondere an einer Halteschiene der Trockenbauwand. Das Aufbringen mehrerer Montagehilfestreifen hat den Vorteil, dass die Breite des Montagehilfestreifens kleiner als die Breite des Dichtprofils bzw. die Höhe des Dichtprofils sein kann.

Alternativ kann vor dem Schritt e) der folgende Schritt ausgeführt werden:
g) Aufbringen einer Montagehilfeschicht auf die zweite Bahn, wobei die Montagehilfeschicht entgegengesetzt zur ersten Bahn angeordnet ist und nach dem Einbringen mehrerer vertikaler Schnitte in Schritt e) mehrere Montagehilfestreifen bildet, die sich jeweils in der ersten Richtung der zweiten Bahn erstrecken und jeweils einem der Dichtprofile zugeordnet sind.

Dieser Schritt hat den Vorteil, dass die Montagehilfestreifen der Dichtprofile in einer zusammenhängenden Schicht aufgebracht und erst nachfolgend aufgeteilt werden.

Ferner kann nach dem Schritt d) der folgende Schritt ausgeführt werden:
h) Einbringen mehrerer vertikaler Schnitte in der ersten Richtung in die erste Bahn zur Bildung von Dichtprofilen mit einem Stufenprofil.

Auf diese Weise können mit geringem Aufwand Dichtprofile mit unterschiedlich hohen Abschnitten hergestellt werden, um entsprechend differenzierte Dichtfunktionen bereitzustellen.

In einer weiteren Ausführungsform erstrecken sich in Schritt h) die mehreren vertikalen Schnitte vollständig in vertikaler Richtung durch die erste Bahn, jedoch nicht in oder durch die zweite Bahn. Somit weist der Abschnitt des Dichtprofils, der durch die erste Bahn gebildet ist, eine andere Höhe auf als der Abschnitt des Dichtprofils, der durch die zweite Bahn gebildet ist.

Es kann vorgesehen sein, dass der Schritt h) vor oder zusammen mit Schritt e) durchgeführt wird, das heißt zu einem Zeitpunkt, bei dem die Dichtprofile noch miteinander verbunden sind und somit Schnitte mit geringem Aufwand definiert eingebracht werden können.

Es ist von Vorteil, wenn die erste Bahn und/oder die zweite Bahn Rollenware ist, da Rollenware besonders kostengünstig und in großer Länge herstellbar ist.

Gemäß einer Ausführungsform ist das Dichtungsmaterial der ersten Bahn ein Schaumstoff, insbesondere ein offenzelliger oder zumindest teilweise offenzelliger Schaumstoff, der besonders flexibel ist.

Gemäß einer weiteren Ausführungsform ist die zweite Bahn aus einem Kunststoff oder einem Schaumstoff gebildet, insbesondere aus einem geschlossenzelligen Schaumstoff, um eine hohe Festigkeit und/oder Widerstandsfähigkeit bereitzustellen.

Ferner kann vorgesehen sein, dass jedes Dichtpofil genau einen Klebstoffstreifen aufweist. Hierdurch kann die Verbindung zwischen dem Abschnitt der ersten Bahn und dem Abschnitt der zweiten Bahn besonders schmal ausgeführt sein.

In einer Ausführungsform sind die verwendeten Bahnen plattenförmig mit gleichbleibender Dicke, um Dichtprofile mit definierten sowie konstanten Maßen zu gewährleisten.

In einer weiteren Ausführungsform hat die erste Bahn eine um wenigstens den Faktor 3 größere Dicke als die zweite Bahn. Somit ist der Abschnitt aus dem Dichtungsmaterial im Vergleich zum Abschnitt aus der zweiten Bahn besonders breit ausgeführt und gewährleistet eine wirkungsvolle Abdichtung der Randfuge.

Erfindungsgemäß ist zur Lösung der oben genannten Aufgabe auch ein Dichtprofil vorgesehen, das nach dem erfindungsgemäßen Verfahren mit den zuvor genannten Vorteilen hergestellt wurde.

Weitere Vorteile und Merkmale ergeben sich aus der nachfolgenden Beschreibung sowie aus den beigefügten Zeichnungen. In diesen zeigen:
- Figur 1 in einer schematischen Schnittdarstellung ein erfindungsgemäßes Dichtprofil,
- Figur 2 in einer schematischen Schnittdarstellung ein erfindungsgemäßes Dichtprofil gemäß einer weiteren Ausführungsform,
- Figur 3 in einer schematischen Darstellung eine Fertigungsstraße, in der entsprechend einem erfindungsgemäßen Verfahren erfindungsgemäße Dichtprofile hergestellt werden, und
- Figuren 4 bis 8 jeweils in einer schematischen Schnittdarstellung einzelne Schritte des Verfahrens aus Figur 3.

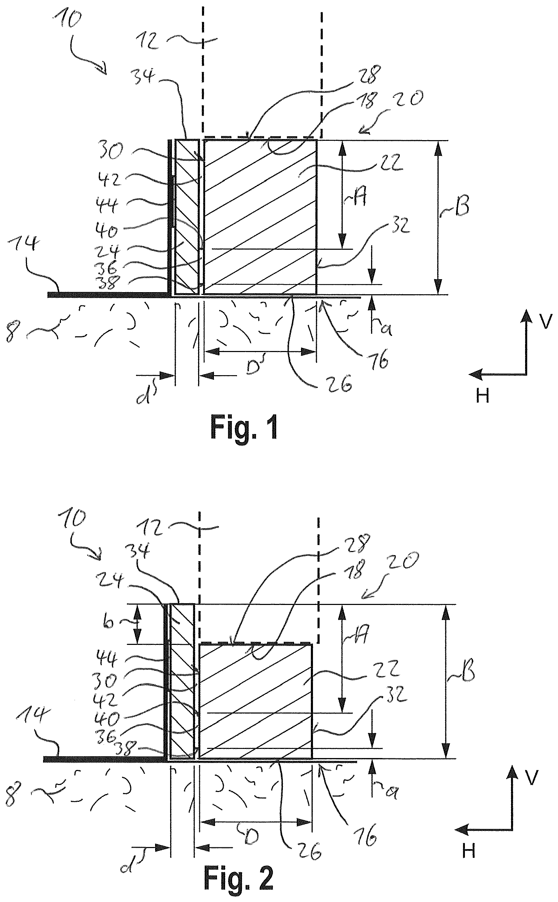

In Figur 1 ist eine Trockenbauwand 10 mit einer Beplankung 12 (Gipswand) und einer Halteschiene 14, die Teil einer Ständerkonstruktion der Trockenbauwand 10 ist, im Querschnitt gezeigt. Zwischen einer Umfangsseite 18 der Beplankung 12 und dem Boden 8 ist eine Randfuge 16 in Form einer Bodenfuge gebildet, die durch ein Dichtprofil 20 abgedichtet wird. Die Figur 1 zeigt die Trockenbauwand 10 in einem nicht fertig montierten Zustand, in dem die Beplankung 12 noch nicht installiert ist und somit noch nicht auf dem Dichtprofil 20 lastet. Die Beplankung 12 ist daher nur gestrichelt eingezeichnet, um ihre Position zu veranschaulichen.

Das Dichtprofil 20 hat einen Grundkörper 22, der einen Dichtabschnitt zwischen der Umfangsseite 18 der Beplankung 12 und dem Boden 8 bildet, und einen Befestigungsabschnitt 24, der zwischen dem Grundkörper 22 und der Halteschiene 14 angeordnet ist.

Der Grundkörper 22 hat einen rechteckigen Querschnitt mit einer dem Boden 8 zugewandten Unterseite 26, einer der Beplankung 12 zugewandten Oberseite 28, an der die Beplankung 12 im montierten Zustand mit der Umfangsseite 18 anliegt, eine Innenseite 30, die dem Befestigungsabschnitt 24 gegenüberliegt, sowie eine zur Innenseite 30 entgegengesetzte Außenseite 32.

Der Befestigungsabschnitt 24 hat einen rechteckigen Querschnitt und erstreckt sich in vertikaler Richtung V bis zu einem vom Boden 8 abgewandten Ende 34, das im nicht montierten Zustand auf derselben vertikalen Höhe endet wie die Oberseite 28 des Grundkörpers 22.

In der in Figur 1 dargestellten Ausführungsform haben somit sowohl der Grundkörper 22 als auch der Befestigungsabschnitt 24 dieselbe vertikale Höhe B.

In horizontaler Richtung H hat der Grundkörper 22 eine Dicke D, die etwa 400 % der Dicke d des Befestigungsabschnitts 24 beträgt.

Selbstverständlich kann der Grundkörper 22 eine beliebig große Dicke D haben. Vorzugsweise beträgt die Dicke D des Grundkörpers 22 mindestens 300 % der Dicke d des Befestigungsabschnitts 24.

Grundsätzlich ist es von Vorteil, wenn der Grundkörper 22 eine Dicke D hat, die der jeweiligen Dicke der Beplankung 12 entspricht, um die Randfuge 16 über die gesamte Tiefe abzudichten.

Der Grundkörper 22 besteht aus einem Dichtungsmaterial aus offenzelligem Schaumstoff, beispielsweise einem Schaumstoff auf PE, XPE oder EPDM Basis.

In einer alternativen Ausführungsform kann der Grundkörper 22 zumindest teilweise aus offenzelligem Schaumstoff bestehen.

Der Befestigungsabschnitt 24 besteht aus einem geschlossenzelligen Schaumstoff.

In einer alternativen Ausführungsform kann der Befestigungsabschnitt 24 aus einem Kunststoff gebildet sein, beispielsweise EPDM, PVC, Moosgummi, thermoplastisches Elastomer oder Silikon.

Das Dichtungsmaterial des Grundkörpers 22 und das Material des Befestigungsabschnitts 24 sind hierbei jeweils Rollenware.

Grundsätzlich können der Grundkörper 22 und der Befestigungsabschnitt 24 jeweils aus einem beliebigen Dichtmaterial bzw. Material gebildet sein.

Der Grundkörper 22 ist mit dem Befestigungsabschnitt 24 über einen Klebstoffstreifen 36 des Dichtprofils 20 verbunden, der sich von einem bodenseitigen unteren Ende 38 bis zu einem entgegengesetzten oberen Ende 40 erstreckt.

Selbstverständlich kann der Klebstoffstreifen 36 in vertikaler Richtung V und/oder in Erstreckungsrichtung des Profils nicht durchgängig sondern unterbrochen ausgebildet sein. Mit anderen Worten kann der Klebstoffstreifen 36 aus mehreren in vertikaler Richtung V und/oder in Erstreckungsrichtung des Profils benachbarten Streifenabschnitten bestehen.

Vorzugsweise ist der Klebstoffstreifen 36 jedoch ein einzelner Streifen, insbesondere mit konstanter Breite in vertikaler Richtung V.

Der Klebstoffstreifen 36 ist hierbei bodenseitig angeordnet.

Konkret bedeutet das, dass das untere Ende 38 des Klebstoffstreifens 36 einen Abstand a in vertikaler Richtung V zur Unterseite 26 des Grundkörpers 22 hat, der etwa 5 % der Höhe B des Grundkörpers 22 entspricht.

Ferner hat das obere Ende 40 des Klebstoffstreifens 36 einen Abstand A in vertikaler Richtung V zum Ende 34 des Befestigungsabschnitts 24, der etwa 75 % der Höhe B des Grundkörpers 22 entspricht.

In einer alternativen Ausführungsform beträgt der Abstand a maximal 20 %, insbesondere maximal 10% der Höhe B.

Zusätzlich oder alternativ kann der Abstand A in einer alternativen Ausführungsform mindestens 50 %, insbesondere mindestens 60 % der Höhe B betragen.

Der Grundkörper 22 ist hierbei ausschließlich über den Klebstoffstreifen 36 mit dem Befestigungsabschnitt 24 verbunden.

In der dargestellten Ausführungsform ist die Innenseite 30 durch einen vertikalen Spalt 42 vom Befestigungsabschnitt 24 getrennt.

In einer alternativen Ausführungsform kann der Grundkörper 22 über seine Innenseite 30 am Befestigungsabschnitt 24 anliegen, jedoch ist in allen Ausführungsformen die Innenseite 30 nur über den Klebstoffstreifen 36 mit dem Befestigungsabschnitts 24 fest verbunden.

Zur Befestigung des Dichtprofils 20 an der Halteschiene 14, weist das Dichtprofil 20 einen Montagehilfestreifen 44 auf, der am Befestigungsabschnitt 24 auf der dem Grundkörper 22 entgegengesetzten Seite angebracht ist.

Der Montagehilfestreifen 44 ist beispielsweise ein doppelseitiges Klebeband mit Abdeckpapier, das das Klebeband bis zur Montage schützt und vor der Montage abgezogen wird.

Im montierten Zustand ist der Grundkörper 22 in vertikaler Richtung V komprimiert in der Randfuge 16 angeordnet. Hierbei bildet der Befestigungsabschnitt 24 einen Dichtsteg, der einen Zwischenraum zwischen der Halteschiene 14 und der Beplankung 12 abdichtet.

Dadurch, dass der Grundkörper 22 nur bodenseitig an dem Befestigungsabschnitt 24 befestigt ist, ist der obere Grundkörper 22 in vertikaler Richtung V besonders gut elastisch verformbar, wodurch seine vertikale Höhe über einen besonders großen Bereich variieren kann, je nach Belastung.

Auf diese Weise dichtet das Dichtprofil 20 die Randfuge 16 zuverlässig ab, solange die Fugenbreite innerhalb des vergleichsweise breiten Bereichs liegt, für den das Dichtprofil 20 vorgesehen ist.

Der Bereich, für den das Dichtprofil 20 vorgesehen ist, beträgt dabei insbesondere ¼" (0,635cm) bis ¾" (1,905cm). Das bedeutet, der Grundkörper 22 ist dazu eingerichtet, Fugenbreiten von ¼" (0,635cm) bis ¾" (1,905cm) zuverlässig abzudichten und weist hierzu beispielsweise eine vertikale Höhe B von mindestens 2cm auf.

Anhand der Figur 2 wird nun ein Dichtprofil 20 gemäß einer weiteren Ausführungsform beschrieben. Für die Bauteile, die von der obigen Ausführungsform bekannt sind, werden dieselben Bezugszeichen verwendet und es wird insoweit auf die vorangegangenen Erläuterungen verwiesen.

Im Unterschied zur in der Figur 1 gezeigten Ausführungsform erstreckt sich der Befestigungsabschnitt 24 im unbelasteten Zustand des Dichtprofils 20 in vertikaler Richtung V um die Höhe b über die Oberseite 28 des Grundkörper 22 hinaus. Das heißt, das Ende 34 endet auf einer vertikalen Höhe, die oberhalb der Oberseite 28 liegt. Ferner bedeutet das, dass die vertikale Höhe des Grundkörper 22 um die Höhe b kleiner ist als die Höhe B des Befestigungsabschnitts 24. Hierdurch weist das Dichtprofil 20 einen stufenförmigen Querschnitt bzw. ein Stufenprofil auf, bei dem der Grundkörper 22 und der Befestigungsabschnitt 24 jeweils eine Stufe mit unterschiedlicher vertikaler Höhe bilden.

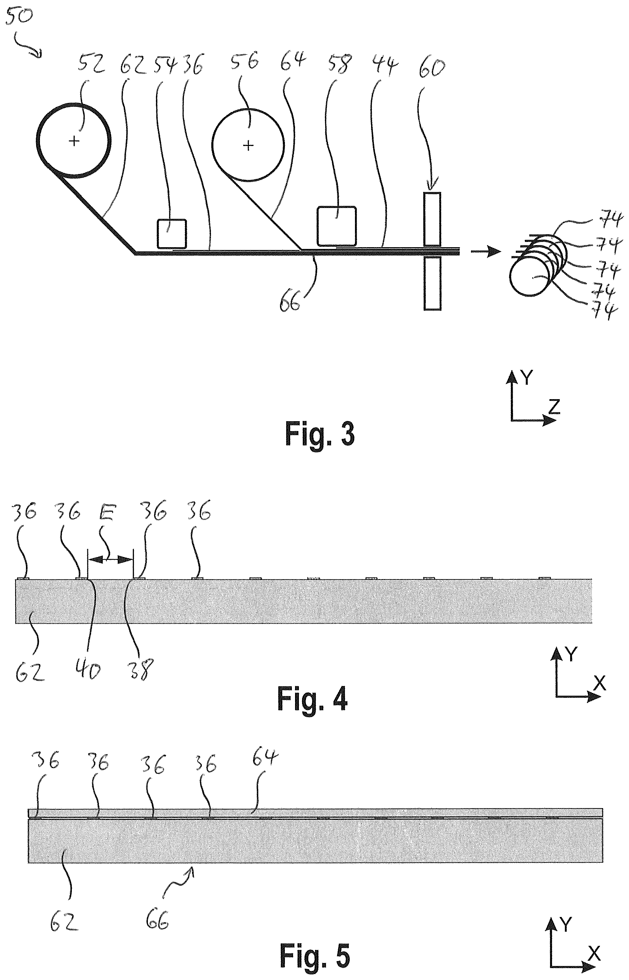

Zur Herstellung der vorgenannten Dichtprofile 20 ist ein Verfahren vorgesehen, das nachfolgend anhand der Figuren 3 bis 8 erläutert wird. Die Herstellung der in der Figur 1 gezeigten Ausführungsform erfolgt dabei nach den in den Figuren 4 bis 7 gezeigten Schritten, während die in der Figur 2 gezeigte Ausführungsform nach den Schritten erfolgt, die in den Figuren 4 bis 6 und 8 gezeigt sind.

Bei dem Verfahren werden mehrere Dichtprofile 20 parallel hergestellt. In den Figuren 4 bis 8 ist die Herstellung von zehn Dichtprofilen 20 gezeigt, wobei die streifenförmigen Dichtprofile 20 bzw. Dichtprofilrohlinge in jedem Schritt gleichzeitig bearbeitet werden.

Grundsätzlich können mit dem Verfahren eine beliebig große Anzahl an Dichtprofilen 20 parallel hergestellt werden, vorzugsweise jedoch zumindest 5.

In Figur 3 ist eine Fertigungsstraße 50 mit einer ersten Rolle 52, einer Klebevorrichtung 54, einer zweiten Rolle 56, einer Aufbringvorrichtung 58 und einer Schneidvorrichtung 60 gezeigt, die in Längsrichtung Z entsprechend der Herstellungsschritte hintereinander angeordnet sind.

Die erste Rolle 52 stellt hierbei eine erste Bahn 62 bereit, die die Grundkörper 22 der Dichtprofile 20 bildet und entsprechend aus demselben Dichtungsmaterial wie diese gebildet ist.

Ferner weist die erste Bahn 62 eine Dicke in Y-Richtung auf, die der Dicke D des Grundkörpers 22 entspricht.

Die zweite Rolle 56 stellt eine zweite Bahn 64 bereit, die die Befestigungsabschnitte 24 der Dichtprofile 20 bildet und entsprechend aus demselben Material wie diese gebildet ist.

Ferner weist die zweite Bahn 64 eine Dicke in Y-Richtung auf, die der Dicke d des Befestigungsabschnitts 24 entspricht.

Die erste Bahn 62 und die zweite Bahn 64 sind somit jeweils Rollenware.

In einem ersten Schritt wird die erste Bahn 62 bereitgestellt.

In einem anschließenden Schritt werden mittels der Klebevorrichtung 54 eine Anzahl an Klebstoffstreifen 36 (siehe Figur 4) auf die erste Bahn 62 aufgebracht, die der Anzahl der herzustellenden Dichtprofile 20 entspricht.

Die Klebstoffstreifen 36 werden hierbei parallel zueinander, in Längsrichtung Z sowie jeweils auf ein ihnen zugeordnetes Dichtprofil 20 aufgetragen.

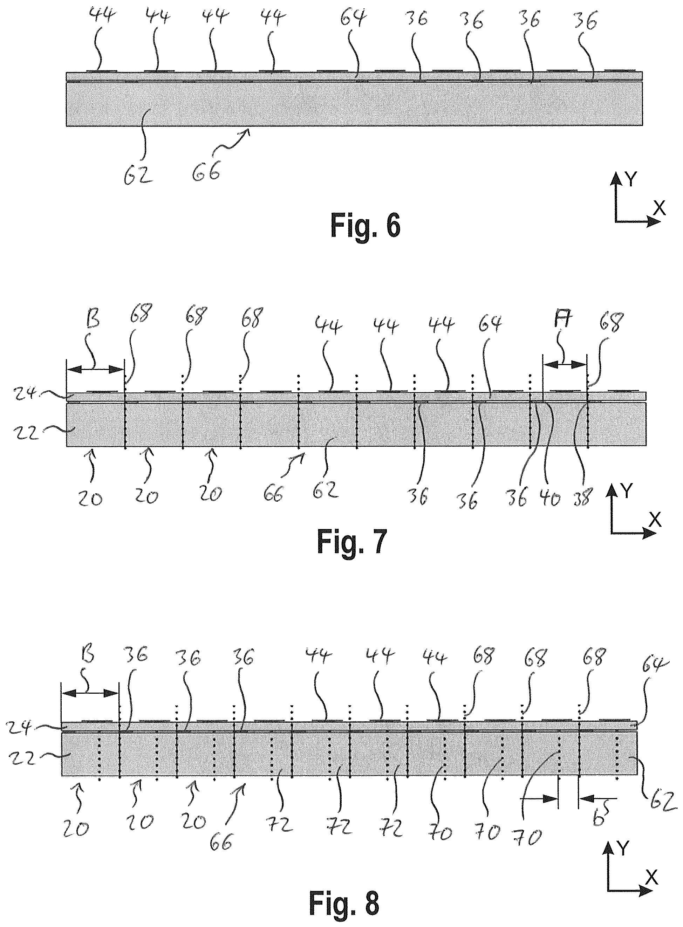

Der Abstand E in X-Richtung zwischen zwei benachbarten Klebstoffstreifen 36, d. h. zwischen dem oberen Ende 40 des einen Klebstoffstreifens 36 und dem gegenüberliegenden unteren Ende 38 des benachbarten Klebstoffstreifens 36, entspricht dabei jeweils 80 % der Höhe B eines Dichtprofils 20 (siehe Figur 7).

In einer alternativen Ausführungsform kann der Abstand E mindestens 50 % der Höhe B eines Dichtprofils 20 entsprechen.

In einem weiteren Schritt wird die bereitgestellte zweite Bahn 64 mit der ersten Bahn 62 zusammengeführt und mittels der Klebstoffstreifen 36 zu einer mehrlagigen Bahn 66 (siehe Figur 5) verklebt.

Das Zusammenführen und Verbinden erfolgt beispielsweise mittels einer Vorrichtung mit Walzen.

Nachfolgend werden mittels der Aufbringvorrichtung 58 eine Anzahl an Montagehilfestreifen 44 (siehe Figur 6) entgegengesetzt zur ersten Bahn 62 auf die zweite Bahn 62 aufgebracht, die der Anzahl der herzustellenden Dichtprofile 20 entspricht.

Die Montagehilfestreifen 44 werden hierbei parallel zueinander, in Längsrichtung Z sowie auf ein ihnen zugeordnetes Dichtprofil 20 aufgetragen.

In einer alternativen Ausführungsform wird anstelle der einzelnen Montagehilfestreifen 44 eine zusammenhängende Montagehilfeschicht aufgebracht, die in einem nachfolgenden Schritt in entsprechende Montagehilfestreifen 44 durchtrennt wird, insbesondere mittels der nachfolgend beschriebenen ersten Schnitte 68.

In einem nachfolgenden Schritt werden mittels der Schneidvorrichtung 60 mehrere erste Schnitte 68 (siehe Figur 7) in Längsrichtung Z eingebracht, die die mehrlagige Bahn 66 jeweils in Y-Richtung durchtrennen.

Die ersten Schnitte 68 trennen dabei jeweils zwei Dichtprofile 20 voneinander. Das bedeutet, die Anzahl der ersten Schnitte 68 ist um eins kleiner als die Anzahl der Dichtprofile 20, die parallel hergestellt werden, im vorliegenden Ausführungsbeispiel also neun.

In einer alternativen Ausführungsform können an einem oder beiden äußeren Enden in X-Richtung der mehrlagigen Bahn 66 jeweils ein weiterer Schnitt vorgesehen sein, um die Enden definiert abzulängen. Insbesondere dann, wenn die erste Bahn 62 und/oder die zweite Bahn 64 in X-Richtung breiter sind als die parallel hergestellten Dichtprofile 20 in Summe.

Benachbarte erste Schnitte 68 haben dabei jeweils einen Abstand B, der der Höhe B (siehe Figur 1) des Dichtprofils 20 entspricht, das durch die beiden benachbarten ersten Schnitte 68 begrenzt wird.

Jeder erste Schnitt 68 ist ferner zwischen den Klebstoffstreifen 36 der beiden angrenzenden Dichtprofile 20 angeordnet, d. h. beabstandet zu diesen.

Hierbei hat jeder erste Schnitt 68 zum oberen Ende 40 des einen Klebstoffstreifens 36 einen Abstand A, der dem Abstand A (siehe Figur 1) des Klebstoffstreifens 36 in vertikaler Richtung V zum Ende 34 des Befestigungsabschnitts 24 des einen Dichtprofils 20 entspricht und der im vorliegenden Ausführungsbeispiel etwa 75 % der Höhe B des Grundkörpers 22 entspricht.

Ferner hat jeder erste Schnitt 68 zum unteren Ende 38 des anderen Klebstoffstreifens 36 einen Abstand, der dem Abstand a (siehe Figur 1) des Klebstoffstreifens 36 in vertikaler Richtung V zur Unterseite 26 des Grundkörpers 22 des anderen Dichtprofils 20 entspricht und der im vorliegenden Ausführungsbeispiel etwa 5 % der Höhe B des Grundkörpers 22 entspricht.

In einer alternativen Ausführungsform kann der erste Schnitt 68 einen geringsten Abstand A zu einem benachbarten Klebstoffstreifen 36 haben, der wenigstens 50 % der Höhe B des Dichtprofils 20 entspricht.

Zusätzlich oder alternativ kann der erste Schnitt 68 einen geringsten Abstand zum anderen benachbarten Klebstoffstreifen 36 haben, der höchstens 20 % der Höhe des Dichtprofils 20 entspricht.

Um die in der Figur 2 gezeigten stufenförmigen Dichtprofile 20 herzustellen, werden zusätzlich zu den ersten Schnitten 68 mittels der Schneidvorrichtung 60 mehrere zweite Schnitte 70 (siehe Figur 8) in Längsrichtung Z eingebracht, die die erste Bahn 62 in Y-Richtung durchtrennen.

Die zweiten Schnitte 70 erstrecken sich dabei jedoch nicht in die zweite Bahn 64 und lassen diese somit unberührt.

Jeder zweite Schnitt 70 ist zwischen dem Klebstoffstreifen 36 des zugeordneten Dichtprofils 20 und dem ersten Schnitt 68 bzw. dem äußeren Ende der mehrlagigen Bahn 66 angeordnet, der bzw. das in einem Abstand A zu dem entsprechenden Klebstoffstreifen 36 vorgesehen ist.

Hierbei hat jeder zweite Schnitt 70 zu dem zugeordneten ersten Schnitt 68 bzw. äußeren Ende der mehrlagigen Bahn 66 einen Abstand b, der der Höhe b (siehe Figur 2) entspricht, über die sich der Befestigungsabschnitt 24 im unbelasteten Zustand des Dichtprofils 20 in vertikaler Richtung V über die Oberseite 28 des Grundkörper 22 hinaus erstreckt.

Das Einbringen der zweiten Schnitte 70 erfolgt vorzugsweise vor oder zusammen mit dem Einbringen der ersten Schnitte 68.

Die durch die ersten und zweiten Schnitte 68, 70 gebildeten Ausschnitte 72 können in einem nachfolgenden Schritt entfernt werden.

In allen Ausführungsformen können die auf diese Weise gestalteten Dichtprofile 20 in einer bestimmten Länge in Längsrichtung Z abgetrennt und platzsparend zu Rollen 74 (siehe Figur 3) aufgewickelt werden.

In einer alternativen Ausführungsform kann die mehrlagige Bahn 66 zu einer Primärrolle aufgerollt werden, bevor in einem späteren Schritt die ersten Schnitte 68 eingebracht werden, beispielsweise indem Rollen 74 mit jeweils einem Dichtprofil 20 von der Primärrolle abgestochen werden.

In einer weiteren alternativen Ausführungsform können die erste und/oder die zweite Bahn 62, 64 anstelle von Rollenware in Form von Platten bereitgestellt werden, die entsprechend dem vorgenannten Verfahren miteinander verbunden und zu mehreren Dichtprofilen 20 weiterverarbeitet werden.

Auf diese Weise ist ein Verfahren bereitgestellt, mittels dem komplex gestaltete Dichtprofile 20 mit geringem Aufwand hergestellt werden können.

Die Erfindung ist nicht auf die gezeigten Ausführungsformen beschränkt. Insbesondere können einzelne Merkmale einer Ausführungsform beliebig mit Merkmalen anderer Ausführungsformen im Rahmen der beigefügten Ansprüche kombiniert werden, insbesondere unabhängig von den anderen Merkmalen der entsprechenden Ausführungsformen.

## Patentansprüche

1. Verfahren zur Herstellung mehrerer streifenförmiger Dichtprofile (20) für eine Randfuge (16), die zwischen einem Boden (8) und einer angrenzenden Beplankung (12) einer Trockenbauwand (10) gebildet ist, mit den folgenden Schritten:
a) Bereitstellen einer ersten Bahn (62) aus einem Dichtungsmaterial,
b) Aufbringen mehrerer Klebstoffstreifen (36) auf die erste Bahn (62), wobei sich die Klebstoffstreifen (36) jeweils in einer ersten Richtung (Z) der Bahn (62) erstrecken und benachbarte Klebstoffstreifen (36) zweier benachbarter Dichtprofile (20) einen Abstand (E) in einer zweiten zur ersten Richtung (Z) senkrechten Richtung (X) voneinander haben, der mindestens 50 % der Höhe (B) eines Dichtprofils (20) im eingebauten Zustand entspricht,
c) Bereitstellen einer zweiten Bahn (64),
d) Zusammenführen und Verbinden der ersten Bahn (62) mit der zweiten Bahn (64) über die Klebstoffstreifen (36) zu einer mehrlagigen Bahn (66), und
e) Einbringen mehrerer Schnitte (68) in der ersten Richtung (Z) in die mehrlagige Bahn (66) beabstandet zu allen Klebstoffstreifen (36) zur Bildung einer Anzahl an Dichtprofilen (20), wobei jeder Schnitt (68) zwei Dichtprofile (20) voneinander trennt und jeder Schnitt (68) einen geringsten Abstand (a) zum unteren Ende (38) des Klebstoffstreifen (36) eines seiner zugeordneten Dichtprofile (20) hat, der höchstens 20 % der Höhe (B) des Dichtprofils (20) entspricht, und einen geringsten Abstand (A) zum oberen Ende (40) des benachbarten Klebstoffstreifen (36) des anderen seiner zugeordneten Dichtprofile (20) hat, welcher wenigstens 50 % der Höhe (B) des Dichtprofils (20) senkrecht zur ersten Richtung (Z) entspricht.

2. Verfahren nach Anspruch 1, **dadurch gekennzeichnet, dass** vor dem Schritt e) der folgende Schritt ausgeführt wird:
f) Aufbringen mehrerer Montagehilfestreifen (44) auf die zweite Bahn (64), wobei die Montagehilfestreifen (44) entgegengesetzt zur ersten Bahn (62) angeordnet sind und sich jeweils in der ersten Richtung (Z) der zweiten Bahn (64) erstrecken, wobei jedem Klebstoffstreifen (36) ein Montagehilfestreifen (44) zugeordnet ist.

3. Verfahren nach Anspruch 1, **dadurch gekennzeichnet, dass** vor dem Schritt e) der folgende Schritt ausgeführt wird:
g) Aufbringen einer Montagehilfeschicht auf die zweite Bahn (64), wobei die Montagehilfeschicht entgegengesetzt zur ersten Bahn (62) angeordnet ist und nach dem Einbringen mehrerer Schnitte (68) in Schritt e) mehrere Montagehilfestreifen (44) bildet, die sich jeweils in der ersten Richtung (Z) der zweiten Bahn (64) erstrecken und jeweils einem der Dichtprofile (20) zugeordnet sind.

4. Verfahren nach einem der vorhergehenden Ansprüche, **dadurch gekennzeichnet, dass** nach dem Schritt d) der folgende Schritt ausgeführt wird:
h) Einbringen mehrerer Schnitte (70) in der ersten Richtung (Z) in die erste Bahn (62) zur Bildung von Dichtprofilen (20) mit einem Stufenprofil.

5. Verfahren nach Anspruch 4, **dadurch gekennzeichnet, dass** sich in Schritt h) die mehreren Schnitte (70) vollständig durch die erste Bahn (62) erstrecken, jedoch nicht in oder durch die zweite Bahn (64).

6. Verfahren nach Anspruch 4 oder 5, **dadurch gekennzeichnet, dass** der Schritt h) vor oder zusammen mit Schritt e) durchgeführt wird.

7. Verfahren nach einem der vorhergehenden Ansprüche, **dadurch gekennzeichnet, dass** die erste Bahn (62) und/oder die zweite Bahn (64) Rollenware sind/ist.

8. Verfahren nach einem der vorhergehenden Ansprüche, **dadurch gekennzeichnet, dass** das Dichtungsmaterial der ersten Bahn (62) ein Schaumstoff ist, insbesondere ein offenzelliger oder zumindest teilweise offenzelliger Schaumstoff.

9. Verfahren nach einem der vorhergehenden Ansprüche, **dadurch gekennzeichnet, dass** die zweite Bahn (64) aus einem Kunststoff oder einem Schaumstoff gebildet ist, insbesondere aus einem geschlossenzelligen Schaumstoff.

10. Verfahren nach einem der vorhergehenden Ansprüche, **dadurch gekennzeichnet, dass** jedes Dichtprofil (20) genau einen Klebstoffstreifen (36) aufweist.

11. Verfahren nach einem der vorhergehenden Ansprüche, **dadurch gekennzeichnet, dass** die verwendeten Bahnen (62, 64) plattenförmig mit gleichbleibender Dicke (d, D) sind.

12. Verfahren nach einem der vorhergehenden Ansprüche, **dadurch gekennzeichnet, dass** die erste Bahn (62) eine um wenigstens den Faktor 3 größere Dicke (D) als die zweite Bahn (64) hat.

13. Dichtprofil (20) umfassend einen Grundkörper (22) der mit einem Befestigungsabschnitt (24) über einen Klebstroffstreifen (36) des Dichtprofils (20), der sich von einem bodenseitigen unteren Ende (38) bis zu einem entgegengesetzten oberen Ende (40) erstreckt, verbunden ist, hergestellt nach einem Verfahren gemäß einem der vorhergehenden Ansprüche.

## Claims

1. Method for producing a plurality of strip-shaped sealing profiles (20) for an edge joint (16) which is formed between a floor (8) and adjacent cladding (12) of a drywall (10), comprising the following steps:
a) providing a first web (62) made from a sealing material,
b) applying a plurality of adhesive strips (36) to the first web (62), wherein the adhesive strips (36) each extend in a first direction (Z) of the web (62) and adjacent adhesive strips (36) of two adjacent sealing profiles (20) are at a distance (E) from one another in a second direction (X) perpendicular to the first direction (Z) which corresponds to at least 50% of the height (B) of a sealing profile (20) in the installed state,
c) providing a second web (64),
d) merging and joining the first web (62) to the second web (64) via the adhesive strips (36) to form a multilayer web (66), and
e) making a plurality of cuts (68) in the first direction (Z) in the multilayer web (66) at a spacing from all adhesive strips (36) to form a number of sealing profiles (20), wherein each cut (68) separates two sealing profiles (20) from one another and each cut (68) has a smallest distance (a) from the lower end (38) of the adhesive strip (36) of one of its associated sealing profiles (20) which corresponds to at most 20% of the height (B) of the sealing profile (20), and has a smallest distance (A) from the upper end (40) of the adjacent adhesive strip (36) of the other of its associated sealing profiles (20) which corresponds to at least 50% of the height (B) of the sealing profile (20) perpendicular to the first direction (Z).

2. Method according to claim 1, **characterized in that** the following step is carried out before step e):
f) applying a plurality of assembly aid strips (44) to the second web (64), the assembly aid strips (44) being arranged opposite the first web (62) and each extending in the first direction (Z) of the second web (64), each adhesive strip (36) being assigned to an assembly aid strip (44).

3. Method according to claim 1, **characterized in that** the following step is carried out before step e):
g) applying an assembly aid layer to the second web (64), the assembly aid layer being arranged opposite the first web (62) and, after a plurality of cuts (68) are made in step e), forming a plurality of assembly aid strips (44), each of which extend in the first direction (Z) of the second web (64) and are assigned to one of the sealing profiles (20).

4. Method according to any of the preceding claims, **characterized in that** the following step is carried out after step d):
h) making a plurality of cuts (70) in the first direction (Z) in the first web (62) to form sealing profiles (20) having a stepped profile.

5. Method according to claim 4, **characterized in that** in step h) the plurality of cuts (70) extend completely through the first web (62), but not in or through the second web (64).

6. Method according to either claim 4 or claim 5, **characterized in that** step h) is carried out before or together with step e).

7. Method according to any of the preceding claims, **characterized in that** the first web (62) and/or the second web (64) are/is roll goods.

8. Method according to any of the preceding claims, **characterized in that** the sealing material of the first web (62) is a foam, in particular an open-cell or at least partially open-cell foam.

9. Method according to any of the preceding claims, **characterized in that** the second web (64) is formed from a plastics material or a foam, in particular from a closed-cell foam.

10. Method according to any of the preceding claims, **characterized in that** each sealing profile (20) has exactly one adhesive strip (36).

11. Method according to any of the preceding claims, **characterized in that** the webs (62, 64) used are flat and have a constant thickness (d, D).

12. Method according to any of the preceding claims, **characterized in that** the first web (62) has a thickness (D) that is at least 3 times greater than that of the second web (64).

13. Sealing profile (20) comprising a main body (22) which is connected to a fastening portion (24) via an adhesive strip (36) of the sealing profile (20), which adhesive strip extends from a bottom-side lower end (38) to an opposite upper end (40), produced by a method according to any of the preceding claims.

## Revendications

1. Procédé pour la fabrication de plusieurs profilés d'étanchéité (20) en forme de bande pour un joint périphérique (16) qui est formé entre un plancher (8) et un parement (12) adjacent d'une cloison sèche (10), comportant les étapes suivantes :
a) fourniture d'une première nappe (62) en un matériau d'étanchéité,
b) application de plusieurs bandes adhésives (36) sur la première nappe (62), dans lequel les bandes adhésives (36) s'étendent respectivement dans une première direction (Z) de la nappe (62) et des bandes adhésives (36) voisines de deux profilés d'étanchéité (20) voisins sont espacées les unes des autres d'une distance (E) dans une seconde direction (X) perpendiculaire à la première direction (Z), laquelle seconde direction correspond à au moins 50 % de la hauteur (B) d'un profilé d'étanchéité (20) à l'état monté,
c) fourniture d'une seconde nappe (64),
d) assemblage et liaison de la première nappe (62) à la seconde nappe (64) par l'intermédiaire des bandes adhésives (36) pour former une nappe multicouche (66), et
e) réalisation de plusieurs coupes (68) dans la première direction (Z) dans la nappe multicouche (66) à distance de toutes les bandes adhésives (36) pour former un certain nombre de profilés d'étanchéité (20), dans lequel chaque coupe (68) sépare deux profilés d'étanchéité (20) l'un de l'autre et chaque coupe (68) a une distance minimale (a) par rapport à l'extrémité inférieure (38) de la bande adhésive (36) de l'un de ses profilés d'étanchéité (20) associés qui correspond au maximum à 20 % de la hauteur (B) du profilé d'étanchéité (20), et une distance minimale (A) par rapport à l'extrémité supérieure (40) de la bande adhésive (36) voisine de l'autre de ses profilés d'étanchéité (20) associés, qui correspond au moins à 50 % de la hauteur (B) du profilé d'étanchéité (20) perpendiculairement à la première direction (Z).

2. Procédé selon la revendication 1, **caractérisé en ce que,** avant l'étape e), l'étape suivante est exécutée :
f) application de plusieurs bandes d'aide au montage (44) sur la seconde nappe (64), dans lequel les bandes d'aide au montage (44) sont agencées à l'opposé de la première nappe (62) et s'étendent respectivement dans la première direction (Z) de la seconde nappe (64), dans lequel une bande d'aide au montage (44) est associée à chaque bande adhésive (36).

3. Procédé selon la revendication 1, **caractérisé en ce que,** avant l'étape e), l'étape suivante est exécutée :
g) application d'une couche d'aide au montage sur la seconde nappe (64), dans lequel la couche d'aide au montage est agencée à l'opposé de la première nappe (62) et forme, après la réalisation de plusieurs coupes (68) à l'étape e), plusieurs bandes d'aide au montage (44) qui s'étendent respectivement dans la première direction (Z) de la seconde nappe (64) et sont associées respectivement à l'un des profilés d'étanchéité (20).

4. Procédé selon l'une des revendications précédentes, **caractérisé en ce que**, après l'étape d), l'étape suivante est exécutée :
h) réalisation de plusieurs coupes (70) dans la première direction (Z) dans la première nappe (62) pour la formation de profilés d'étanchéité (20) comportant un profil étagé.

5. Procédé selon la revendication 4, **caractérisé en ce que,** à l'étape h), les plusieurs coupes (70) s'étendent entièrement à travers la première nappe (62), mais pas dans ou à travers la seconde nappe (64).

6. Procédé selon la revendication 4 ou 5, **caractérisé en ce que** l'étape h) est effectuée avant ou conjointement avec l'étape e).

7. Procédé selon l'une des revendications précédentes, **caractérisé en ce que** la première nappe (62) et/ou la seconde nappe (64) est/sont un rouleau.

8. Procédé selon l'une des revendications précédentes, **caractérisé en ce que** le matériau d'étanchéité de la première nappe (62) est une mousse, en particulier une mousse à alvéoles ouvertes ou au moins partiellement à alvéoles ouvertes.

9. Procédé selon l'une des revendications précédentes, **caractérisé en ce que** la seconde nappe (64) est formée d'une matière plastique ou d'une mousse, en particulier d'une mousse à alvéoles fermées.

10. Procédé selon l'une des revendications précédentes, **caractérisé en ce que** chaque profilé d'étanchéité (20) présente exactement une bande adhésive (36).

11. Procédé selon l'une des revendications précédentes, **caractérisé en ce que** les nappes (62, 64) utilisées sont en forme de plaques d'épaisseur (d, D) constante.

12. Procédé selon l'une des revendications précédentes, **caractérisé en ce que** la première nappe (62) a une épaisseur (D) supérieure d'au moins un facteur 3 à celle de la seconde nappe (64).

13. Profilé d'étanchéité (20) comprenant un corps de base (22) qui est relié à une section de fixation (24) par l'intermédiaire d'une bande adhésive (36) du profilé d'étanchéité (20), laquelle bande adhésive s'étend d'une extrémité inférieure (38) côté plancher jusqu'à une extrémité supérieure (40) opposée, le profilé d'étanchéité étant fabriqué selon un procédé conformément à l'une des revendications précédentes.
